# EUROPEAN PATENT APPLICATION

(11) **EP 1 579 772 A1**
(43) Date of publication of application: **28.09.2005**
(21) Application number: 05006422.9
(22) Date of filing: 23.03.2005
(51) Int. Cl.: A23L 1/20, A23L 1/238

(54) **Method for the production of koji**

(30) Priority: 25.03.2004 JP 2004088684
(71) Applicant: Ajinomoto Co., Inc., Tokyo (JP)
(72) Inventor: Tada, Norio, Kawasaki-shi Kanagawa (JP); Matumoto, Nobutoshi, Kawasaki-shi Kanagawa (JP); Sakurai, Michinari, Kawasaki-shi Kanagawa (JP); Nishimura, Yasushi, Kawasaki-shi Kanagawa (JP); Koibuchi, Kyoko, Kawasaki-shi Kanagawa (JP); Okamura, Hideki, Kawasaki-shi Kanagawa (JP)
(74) Representative: Strehl Schübel-Hopf & Partner

(57) **Abstract**

The invention provides a novel fermented soybean paste-like foodstuff in an industrial scale exhibiting thickness, strong umami taste and richness which is salt-free and can be used for wide variety of processed foods, seasonings and food materials.

The novel foodstuff is obtained by a method of producing a fermented foodstuff comprising the steps of adding a koji mold and a bacteriocin producing lactic acid bacterium, a cell fraction or disrupted cells thereof or a supernatant thereof to a food material, making koji in an apparatus in which the outside air is shut out except for the time period of "TEIRE"-treatment, while supplying sterilized air continuously or intermittently.

## Description

### [Technical Field]

The present invention relates to a method of the production of a fermented soybean paste-like foodstuff exhibiting thickness, strong umami taste and richness and not containing sodium chloride, which can be used as a novel food material or as a seasoning.

### [Background Art]

Fermented soybean paste (miso) is a Japanese traditional food which may be referred to as roots of fermented foods. However, due to shifting Western life style in recent years, dishes prepared using the fermented soybean paste have been predominantly soups of fermented soybean paste (miso soup), with the consumption of the miso soup being on a downward trend. Thus, in order to boost the demand for fermented soybean paste as a healthy diet, development of foods using fermented soybean paste, fitting with the current society has been desired. However, fermented soybean paste contains a significant amount of salt and there is a strong concern that heavy use of fermented soybean paste may cause excessive consumption of the salt. Accordingly, in the present circumstances, demand for fermented soybean paste has decreased.

Meanwhile, fermented soybean paste has been conventionally used in dressings, a variety of seasoning or the like in addition to miso soups. As described above, when use of the fermented soybean paste in various applications is intended, not only the matter of salinity, but also various microorganisms intrinsically existing in the fermented soybean paste, particularly, bacteria belonging to genera *Bacillus* that are heat resistant bacteria often lead to problems. More specifically, because the fermented soybean paste is fermented while being almost exposed to the outside air during its production, it may be contaminated with a variety of microorganisms. These microorganisms do not proliferate whereby not causing problems so often in the fermented soybean paste due to sodium chloride, however, when the fermented soybean paste is used in dressings and the like, the intrinsically existing microorganisms therein may proliferate in the product, and may cause deterioration of the product.

Accordingly, we elaborately investigated, and consequently succeeded in development of an entirely new fermented soybean paste-like food material without containing sodium chloride, and with reduced intrinsically existing microorganisms, particularly bacteria belonging to genera *Bacillus* to an undetectable level, on the basis of the method of the production of a fermented soybean paste. This food material does not contain sodium chloride, and no microorganism is detected therein. In addition, content of amino acids, particularly glutamic acid is higher in comparison with that in ordinary fermented soybean paste. Thus, this food material exhibits thickness, strong umami taste and richness, and is applicable for use in seasonings, as well as use as foodstuffs which may be eaten as they are.

Conventionally, in an attempt to provide a method of the production of a reduced-salt fermented soybean paste or a salt-free fermented soybean paste, a variety of methods have been proposed such as a production method for a food highly containing protein by using low-salt fermented soybean paste produced by diluting and dialyzing a fermented soybean paste (JP-A No. S58-175463), a production method for a desalted fermented soybean paste by dilution of a fermented soybean paste with water (JP-A No. S63-214154), and the like. Further, a method in which a salt-free fermented soybean paste is prepared in the laboratory scale through carrying out lactic acid fermentation by inoculating a lactic acid bacterium that produces bacteriocin referred to as nisin is disclosed (Handbook of applied unheated sterilization of foods, Takeo Katou, p. 216), in which genera *Bacillus* and other contaminating bacteria were not reportedly detected. However, upon production of the fermented soybean paste in an industrial scale in practice, merely adding the nisin producing lactic acid bacterium causes so called rancidity through remarkable proliferation of various microorganisms contaminated from the outside air, particularly lactic acid bacteria such as genera *Pediococcus* and *Enterococcus,* whereby lowering the pH due to lactic acid produced by those lactic acid bacteria. In other words, although preparation of the salt-free fermented soybean paste in a laboratory scale is comparatively easy in terms of control of the microorganisms, control of undesired microorganisms is very difficult upon manufacture in an industrial scale. Handbook of applied unheated sterilization of foods, Takeo Katou describes that industrial production of the salt-free fermented soybean paste is under study, however, specific conditions for the manufacture is not disclosed. Thus, essential element constituting the invention, i.e., koji making carried out in a state where the outside air is shut out is not referred to at all. Also, a production method for koji in which processing a raw material for koji comprising water spraying, steaming, cooling , and koji making is carried out in a single apparatus using a rotary drum steamer is disclosed (JP-A No. H07-107966). In this method, no undesired microorganism was reportedly detected in the resulting koji. However, JP-A No. H07-107966 relates to a method and an apparatus for the culture of koji, and hydrolysis of the unrefined soy in the absence of sodium chloride, i.e., production of the salt-free fermented soybean paste is not referred to at all. Furthermore, the apparatus described in JP-A No. H07-107966 is complicated and expensive due to a combined pipe for water and steam supply, a driving device for rotating the vessel and the like. Accordingly, development of a production method for a food material which is fermented under a low-salt condition without contamination of microorganisms, using an inexpensive apparatus having a simple structure has been desired.

### [Disclosure of the Invention]

### [Problems that the Invention is to Solve]

An object of the present invention is to provide a novel fermented soybean paste-like foodstuff in an industrial scale exhibiting thickness, strong umami taste and richness which contains a low amount of salt and can be used as wide variety of processed foods, seasonings such as dipping sauces and sauces, and novel food materials.

### [Means for Solving the Problems]

The present inventors elaborately investigated in order to solve the problems as described above, and consequently found that a novel fermented soybean paste-like foodstuff which contains a low amount of sodium chloride, and exhibits thickness, strong umami taste and richness can be produced by a method as defined in the attached claims.
Accordingly, the invention is as follows.
(1) A method of producing a fermented foodstuff comprising the steps of adding a koji mold and a bacteriocin producing lactic acid bacterium, a cell fraction or disrupted cells thereof or a supernatant thereof to a food material, making koji in an apparatus in which the outside air is shut out except for the time period of "TEIRE"-treatment, while supplying sterilized air continuously or intermittently.
(2) The process according to (1), wherein the resulting koji is mixed with a bacteriocin producing lactic acid bacterium, a cell fraction or disrupted cells thereof or a supernatant thereof.
(3) The process according to (1) or (2), wherein food material containing soybean is added to the resulting koji in an amount of 0.01 to 50 times by weight of the resulting koji.
(4) The method according to (1), wherein said food material is soybean, rice or wheat.
(5) The process according to (4), wherein said food material is soybean.
(6) The method according to (2) or (4), wherein an unrefined soy is formed by making a paste form of the resulting mixture, and then the unrefined soy is hydrolyzed.
(7) The method according to any one of the preceding claims, wherein the said koji mold is *A. sojae* and/or *A. oryzae.*
(8) The method according to any one of (1) to (7), wherein the said bacteriocin producing lactic acid bacterium is a nisin producing lactic acid bacterium.
(9) The method according to any one of (1) to (8), wherein the nisin activity of a culture broth of the nisin producing lactic acid bacterium or a cell fraction, disrupted cells or a supernatant thereof is 20 IU/ml or higher.
(10) The method according to any one of (1) to (9), wherein the nisin activity of a culture broth of the nisin producing lactic acid bacterium or a cell fraction, disrupted cells or a supernatant thereof is 200 IU/ml or higher.
(11) The method according to any one of (1) to (10), wherein the said lactic acid bacterium is Lactococcus lactis AJ110212 (FERM BP-8552).
(12) The method according to any one of (1) to (11), wherein the said sterilized air is sterilized with a filter which can collect 99.97% or more of dust of 0.3 µm or larger.
(13) The method according to any one of (1) to (12), wherein the total time period in which the outside air is shut out is 85 to 97,5 % of the total time period of koji making.
(14) The method according to (13), wherein the total time period in which the outside air is shut out is 95 to 97, 5 % of the total time period of koji making.
(15) The method according to any one of (1) to (14) wherein the time period of koji making is 17 to 62 hours, and the time period of koji making in which the outside air is shut out is 15.5 to 61.5 hours.
(16) The method according to any one of (1) to (15), wherein the amount of the said culture broth of a bacteriocin producing lactic acid bacterium or a supernatant thereof added to the food material is 0.0001 to 0.2 time in weight of the food material.
(17) The method according to any one of (1) to (16), wherein the amount of the said culture broth of a bacteriocin producing lactic acid bacterium or a supernatant thereof added to the food material is 0.001 to 0.1 time in weight of the food material.
(18) The method according to any one of (1) to (17), wherein the amount of the said culture broth of a bacteriocin producing lactic acid bacterium or a supernatant thereof mixed with the resulting koji is 0.01 to 5 times in weight of the resulting koji.
(19) The method according to any one of (1) to (18), wherein the hydrolyzing condition of the unrefined soy is at 20 to 50°C for 1 to 50 days.
(20) The method according to any one of (1) to (19), wherein the hydrolyzing condition of the unrefined soy is at 20 to 45°C for 3 to 30 days.
(21) The method according to any one of (6) to (20), wherein the unrefined soy is hydrolysed in the presence of sodium chloride in an amount of less than 5 % by weight of the unrefined soy.
(22) A fermented foodstuff obtainable by a process according to any one of (1) to (21).
(23) The use of a foodstuff according to (22) as a food material or as a seasoning.

### [Advantage of the Invention]

Advantages of the invention include providing a novel fermented soybean paste-like foodstuff having a perceptional image of healthiness on behalf of being low-salt, containing higher glutamic acid content and soluble nitrogen at shorter period of fermentation and aging process compared to an ordinary fermented soybean paste because of no inhibition by sodium chloride of the activities of enzymes in koji mold such as protease and peptidase, exhibiting thickness, strong umami taste and richness and enabling use in seasoning applications as well as use as a food material, by using a simple and inexpensive manufacturing apparatus.

### [Best Mode for Carrying Out the Invention]

The food material used for koji in the invention may be soybean, rice, wheat or the like which has been used in usual fermented soybean paste. Such raw materials may be subjected to a treatment of soaking in water, and a treatment of steaming as needed.

With the aforementioned raw material are mixed a culture broth of a lactic acid bacterium having an ability to produce bacteriocin that is an anti-bacterial substance or a supernatant thereof, and koji mold. The mixture is put into a koji making machine capable of being supplied with sterilized air and of keeping the inner part of the machine out of the outside air. The apparatus in which koji is made or koji making machine capable of being supplied with sterilized air and of keeping the inner part out of the outside air has a function to supply sterilized air into the koji making machine, and has a structure allowing the inner part of the koji making machine to cut off the ambient air. For example, a koji making machine of the rotary drum type is included. However, a koji making machine having a structure allowing sterilized air to be supplied into the koji making machine, being equipped with an openable and closable cover capable of keeping the inner part out of the outside air is more preferred because the structure is simple and the apparatus is inexpensive. For sterilizing the air, a filter which can collect 99.97% or more of dust of 0.3 µm or larger, e.g., HEPA filter or the like may be used. To outlets for air of the koji making machine must be installed a filer for shutting out the outside air. Koji making machines which cannot keep the inner part thereof out of the outside air, for example, rotary disc type koji making machines, static ventilation type koji making machines and the like are subject to be contaminated from the outside air with microorganisms, especially lactic acid bacteria such as genera Pediococcus and Enterococcus which produce lactic acid during aging and may cause so-called rancidity. The ventilation system is not particularly limited, but a ventilation system in which the air supplied from the bottom of the machine, a ventilation system in which the air supplied from the upper part of the machine or the like may be used.

The culture broth of a lactic acid bacterium or a cell fraction or disrupted cells or a supernatant thereof have for example the nisin activity of 20 IU/ml or higher and preferably 200 IU/ml or higher which may be added in an amount of 0.0001 to 0.2 times, preferably 0.001 to 0.1 times, and more preferably 0.01 to 0.05 times of the raw material for koji. When the amount is less than 0.0001 times, an anti-bacterial activity is insufficient to prevent from contamination with undesirable microorganisms. Needless to say, the amount of the culture broth of the lactic acid bacteria or the supernatant thereof may be adjusted by the nisin activity. When the amount is higher than 0.2 times, moisture content of the raw material becomes so high that the growth of the Koji mold is adversely affected. Other than nisin, examples of the bacteriocin produced by lactic acid bacteria include pediocin, sakacin, nukacin and the like. Among them, nisin is preferably used in light of the wide antibacterial spectrum. When the bacteriocin is nisin, the kind thereof which is produced by lactic acid bacteria may be any one of nisin A, nisin Z and analogues thereof. Higher bacteriocin activity in the culture broth of the lactic acid bacterium or a supernatant thereof for use is desired for preventing contamination with and proliferation of microorganisms. Thus, for example, L. lactis AJ110212 (FERM BP-8552) and the like which highly produce nisin Z can be used. The L. lactis AJ110212 strain was deposited on November 19, 2003 with National Institute of Advanced Industrial Science and Technology, Patent Microorganisms Depositary Center under the accession number of FERM BP-8552.

A "koji mold" is a mold inoculated to a plant material to obtain koji which is the resource of enzymes to hydrolyze the plant material. As the Koji mold, *A. oryase* and/or *A. sojae* can be used as used in fermented soybean pastes. It is desired that the Koji mold for use can highly hydrolyze the raw material protein into amino acids and peptides, and can impart thickness, strong umami taste and richness to the resultant novel fermented soybean paste-like foodstuff, but not particularly limited thereto.

After putting the mixture of the raw material for koji, the culture broth of a lactic acid bacterium or a supernatant thereof and Koji mold into the koji making machine, koji making is carried out at 20 to 40°C for 17 to 62 hours, preferably 24 to 34°C for 43 to 55 hours, and more preferably 43 to 49 hours in the state where the inner part of the koji making machine is kept out of the outside air except for the time period of "TEIRE"-treatment (the steps of stirring the mixture in the koji making machine, for example, every 10 hours for the purpose of accelerating the growth of the Koji mold) to obtain koji. When the temperature of koji making is 40°C or higher, enzymatic activity required for hydrolysis of the material protein is lowered, while the temperature of 20°C or lower results in insufficient growth of the Koji mold. In either case, enzyme required for hydrolysis of the raw material protein can not be sufficiently obtained, therefore, a novel fermented soybean paste-like foodstuff exhibiting satisfactory thickness, umami taste and richness can not be provided. Further, when the time period of koji making is less than 17 hours, the Koji mold does not grow enough, therefore, a novel fermented soybean paste-like foodstuff exhibiting satisfactory thickness, umami taste and richness can not be provided. In case the time period of koji making needs to be shorter, it is desirable to set the temperature for koji making to 34 to 40°C in order to accelerate the growth speed of the koji mold. Moreover, when the time period of koji making is longer than 62 hours, the enzymatic activity required for hydrolysis of the raw material protein becomes so low that satisfactory thickness, umami taste and richness can not be achieved, but bitterness may be imparted. In case the time period of koji making needs to be longer, it is desirable to set the temperature for koji making to 20 to 30°C in order to suppress the growth speed of the koji mold. Because the inner part of the koji making machine is exposed to the outside air upon "TEIRE"-treatment, there is a risk of contamination with undesired microorganisms. Therefore, in order to minimize the risk, total time period of the "TEIRE"-treatment, in other words, integrated value of the time period during which the inner part of the koji making machine is exposed to the outside air must be as short as possible. That is, it is needed to reduce the time for "TEIRE"-treatment or to reduce the number of the treatment. The time for one "TEIRE"-treatment is less than 1.5 hours, preferably less than 30 minutes and more preferably around 15 minutes. The usual number of "TEIRE"-treatment is once every 10 hours during the koji making process. Accordingly, the koji making is carried out in the state where the outside air is shut out for at least 15.5 to 61.5 hours, and preferably 16.5 to 60.5 hours.

Next, to the resulting koji is added a culture broth of a lactic acid bacterium that produces bacteriocin such as nisin, or a supernatant thereof such that the moisture content of the unrefined soy becomes 35 to 60%, and preferably 40 to 50%, in an amount of 0.01 to 5 times, preferably 0.1 to 1 time of the weight of koji, and as needed, thereto is added a food material or materials in an amount of 0.01 to 50 times of the weight of koji to obtain an unrefined soy. In this instance, the term "as needed" means that there is a case where an addition of soybean at the process for preparing an unrefined soy may not be required when soybean is used as the raw material of koji. In general, soybean needs to be mixed with koji molds for making koji or added in the resulting koji to obtain unrefined soy. More specifically, when soybean is used as a material of koji, a culture broth of a lactic acid bacterium or a supernatant thereof is again added to the resulting koji made of the mixture of soybean, a culture broth of a lactic acid bacterium or a supernatant thereof and Koji mold, whereby forming the unrefined soy. Moreover, a food material such as soybean, rice, or the like may be added to the resulting koji. In this case, the food material may be previously steam-cooked or roasted. For example, when rice koji prepared from rice as a koji material or wheat koji from wheat is used, previously steam cooked or roasted soybean may be added to the resulting koji. When soybean koji is used, previously steam-cooked or roasted wheat or rice may be added to the resulting koji and soybean also may be added for the production cost reduction purpose. Further, an extract from the said plant materials or a specific component thereof may be added to the resulting koji. The examples include soybean extract, rice starch, wheat bran and the like. The taste or flavor as well as color of the fermented soybean paste-like foodstuff can be controlled by the kind or the amount of the food material added to the resulting koji. For example, sweetness can be imparted by adding rice. The order of adding the culture broth or the supernatant and the food material is not limited. The food material may be added to the resulting koji before or after the culture broth or the supernatant is added, or together with the culture broth or the supernatant.

When the amount of addition of the culture broth of a lactic acid bacterium or a supernatant thereof is less than 0.01 times, proliferation of the microorganisms can not be suppressed. Further, when the it is greater than 5 times, insufficient hydrolysis of the protein may be achieved, thereby failing to provide a novel fermented soybean paste-like foodstuff exhibiting enough thickness, umami taste and richness.

Next, the mixture of the resulting koji, a food material or materials, and the culture broth of a nisin lactic acid bacterium or the supernatant thereof is ground with a chopper or the like, and thus a paste form is obtained to form an unrefined soy. The unrefined soy is incubated at 20 to 50°C, preferably 20 to 45°C, and more preferably 25 to 35°C for fermentation (aging) and hydrolysis for 1 to 50 days, preferably 3 to 30 days, more preferably 4 to 14 days, and further preferably 4 to 9 days. When the temperature is lower than 20°C, hydrolysis of the protein is not sufficient, and thus, a novel fermented soybean paste-like foodstuff exhibiting sufficient thickness, umami taste and richness can not be provided. Also, the temperature of higher than 50°C is not preferred because sugars and amino acids in the unrefined soy react to impart browning odors, burnt odors and bitterness to the novel fermented soybean paste-like foodstuff. Similar tendency is found also for the number of days of aging. Aging for less than 24 hours may result in insufficient hydrolysis of the protein, and thus, a novel fermented soybean paste-like foodstuff exhibiting sufficient thickness, umami taste and richness can not be provided. Aging for longer than 50 days is not preferred because sugars and amino acids in the unrefined soy react to imparts browning odors, burnt odors and bitterness to the novel fermented soybean paste-like foodstuff. The unrefined soy is hydrolyzed in the presence of sodium chloride in an amount of less than 5 % by weight, preferably less than 1 % by weight, and more preferably less than 0.1% by weight of the unrefined soy.

Next, the unrefined soy after completing the aging and hydrolysis is heated at 50 to 130°C for 1 to 150 minutes. The purposes of the heating are sterilization, and prevention of a quality deterioration during the storage period by deactivating the enzyme such as protease in the unrefined soy. Process for heating is not limited, but a double pipe heater, a multiple pipe heater or the like which has been used in pasteurization of fermented soybean pastes can be used. Also, a warm water bath or the like may be used. The heating temperature of lower than 50°C may result in insufficient sterilization and inactivation of the enzyme, while that of higher than 130°C is not preferred due to causing browning odors, burnt odors and bitterness.
Similar tendency is found for the time period. Thus, the heating time period of less than 1 minute may result in insufficient sterilization and inactivation of the enzyme, while that of longer than 150 minutes is not preferred due to causing browning odors, burnt odors and bitterness.

Although this novel fermented soybean paste-like foodstuff can be used as it is in the paste form, it may be also used in the form of powder after drying by a spray drier, drum drier, a vacuum drum drier, a freeze drier or the like.

The novel fermented soybean paste-like foodstuff obtained according to the method of the invention exhibits thickness, strong umami taste and richness based on the sensory evaluation. This novel fermented soybean paste-like foodstuff is versatile which can be extensively utilized in various types of foods and beverages. The foodstuff is characterized by an effect to improve qualities of tastes of foods and beverages through imparting richness and thickness thereto. For example, it can be used in sauces for Western dishes such as demiglace sauce, western soups such as potage, seasonings for Chinese dishes such as Tobanjan (fermented broad bean paste with red pepper), seasonings for Japanese dishes such as dipping sauces. In addition, it can be also used in confectioneries such as bean-j am, pudding, ice cream, cake and the like which have been inconceivable for conventional fermented soybean paste. Moreover, it is delicious enough even if it is eaten as it is. Just slight adjustment of the taste enables ingestion of health functions included in soybean in large quantities.

Mode of use of the novel fermented soybean paste-like foodstuff obtained according to the method of the invention may be any one of: modes in which it is used upon production or processing of various foods and beverages; methods of use through blending it in various liquid, granulated or powder seasonings; modes in which it is eaten as it is and the like.

### [Example 1]

### (Study on aging time)

Soybean in an amount of 50 kg was soaked in water to allow water absorption, and steam-cooked in a steam cooker at 114°C for 40 minutes. The steam-cooked soybean was put into an airtight type koji making machine (being able to keep the inner part out of the outside air), and therein were mixed 1 kg of a culture broth of L. lactis (nisin activity: 1208 IU/ml) and 0.05 kg of a koji mold starter ("Koji mold starter for fermented soybean paste" manufactured by Bioc), followed by subjecting to koji making at 30°C for 43 hours. For removal of the heat generated upon fermentation during the koji making, the air sterilized by passing through a HEPA filter was used. During the koji making, koji was made in the koji making machine in the state of keeping the inner part out of the outside air except for the time period of "TEIRE"-treatment. The "TEIRE" treatment was carried out for 15 minutes every 10 hours after the initiation of the koji making in the state of the inner part of the koji making machine not being airtight but exposed to the outside air. To thus resulting koji was added 15.4 kg of a culture broth of L. lactis (nisin activity: 1208 IU/ml). After mixing, the mixture was subjected to grinding with a chopper to give a paste form. This paste was packed in a laminated pouch such that 500 g is filled in one pack. After incubating this pouch at 30°C for 3 to 60 days, it was heated at 80°C for 40 minutes.

For the novel fermented soybean paste-like foodstuff obtained according to the above operation, analyses of solubilized nitrogen (solubilized TN), glutamic acid concentration, lactic acid concentration, pH, and microorganisms were carried out. Also, a sensory evaluation by the sensory evaluation panel consisting of 3 experts was carried out. Upon the sensory evaluation, the sample was eaten as it was and scored by one to five points, with three points or more being evaluated as acceptable. The results are shown in Table 1.

Consequently, no microorganism was detected in all experimental groups. Furthermore, the novel fermented soybean paste-like foodstuff which was evaluated as acceptable in the sensory test was those of 3 to 30 days; thickness, strong umami taste and richness were exhibited in those of 4 to 14 days; high scores were given for those of 4 to 9 days; and the best score was given to that of 7 days. Therefore, it was confirmed that the time period of aging and hydrolysis may be 3 to 30 days, preferably 4 to 14 days, and more preferably 4 to 9 days. Concentrations of solubilized TN and glutamic acid should be strikingly noted. Commercially available general fermented soybean paste made only from soybean (mame miso) contains approximately 1.2 weight% of solubilized TN and 0.6 weight% glutamic acid. Thus, in this novel fermented soybean paste-like foodstuff, particularly, in one prepared with the hydrolysis period of 7 days or longer, solubilized TN is included 2 times or more, while glutamic acid is included 3 times or more, which would contribute to imparting thickness, strong umami taste and richness.

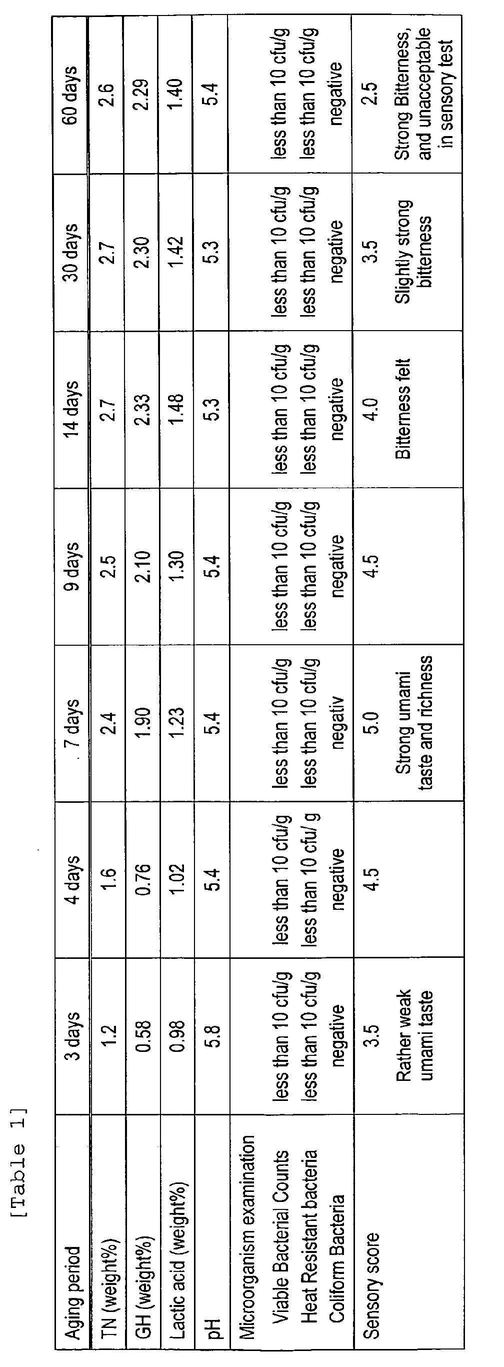

### [Example 2]

### (Study on hydrolysis temperature)

Soybean in an amount of 50 kg was soaked in water to allow water absorption, and steam-cooked in a steam cooker at 114°C for 40 minutes. The steam-cooked soybean was put into an airtight type koji making machine, and therein were mixed 1 kg of a culture broth of L. lactis AJ110212 (FERM BP-8552) (nisin activity: 4500 IU/ml) and 0.05 kg of a koji mold starter ("Koji mold starter for fermented soybean paste" manufactured by Bioc), followed by subjecting to koji making at 30°C for 43 hours. For removal of the heat generated upon fermentation during the koji making, the air sterilized by passing through a HEPA filter was used. During the koji making, koji was made in the koji making machine in the state of keeping the inner part out of the outside air except for the time period of "TEIRE"-treatment. The "TEIRE"-treatment was carried out for 15 minutes every 10 hours after the initiation of the koji making in the state of the inner part of the koji making machine being exposed to the outside air. To thus resulting koji was added 15.4 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g is filled in one pack. After incubating this pouch at 20 to 50°C for 7 days, it was heated at 80°C for 40 minutes.

For the novel fermented soybean paste-like foodstuff obtained according to the above operation a sensory evaluation by the sensory evaluation panel consisting of 3 experts was carried out. Upon the sensory evaluation, the sample was eaten as it was and scored by one to five points, with three points or more being evaluated as acceptable. The results are shown in Table 2.

Consequently, the novel fermented soybean paste-like foodstuffs evaluated as acceptable in the sensory test were those of 20 to 50°C. The samples exhibiting thickness, strong umami taste and richness, while the score point of 3.5 or greater was given were those of 20 to 45°C. Therefore, it was confirmed that the temperature of aging is 20 to 50°C, and preferably 20 to 45°C.

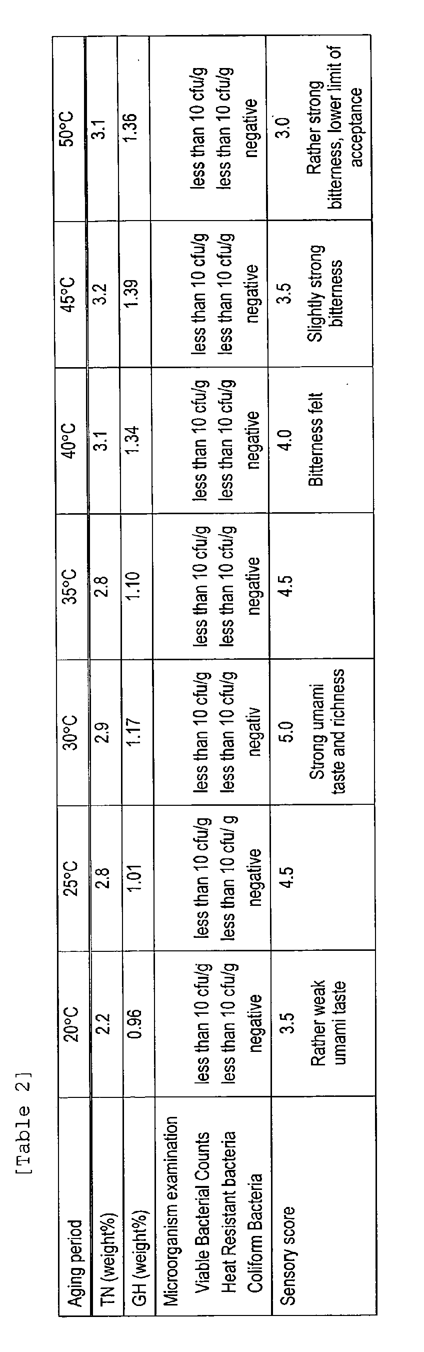

### [Example 3]

### (Study on the amount of addition of raw material and steam-cooked soybean)

Rice in an amount of 300 g was soaked in water to allow water absorption, and steam-cooked in a small steam-cooker at 100°C for 30 minutes. In the steam-cooked rice were mixed 6 g of a culture broth of L. lactis AJ110212 (FERM BP-8552) (nisin activity: 4500 IU/ml) and 1 g of a koji mold starter (manufactured by Higuchi Moyashi K.K.). The mixture was put into a laboratory koji making machine which can keep the inner part out of the outside air and subjected to koji making at 30°C for 43 hours. For removal of the heat generated upon fermentation during the koji making, the air sterilized by passing through a filter was used. During the koji making, koji was made in the koji making machine in the state of keeping the inner part out of the outside air except for the time period of "TEIRE" -treatment. The "TEIRE"-treatment was carried out for 2 minutes every 10 hours after the initiation of the koji making in the state of the inner part of the koji making machine being exposed to the outside air. To 100 g of thus resulting rice koji was added soybean in an amount of 100 g, 250 g, 500 g, 1 kg, 2 kg, respectively, and then a culture broth of L. lactis AJ110212 (FERM BP-8552) (nisin activity: 4500 IU/ml) was mixed therewith in an amount of 0.15 g, 0.06 g, 0.015 g, 0.0075 g, sequentially such that the moisture content of the unrefined soy became 47%. Thereafter, the mixture was ground with a chopper to give a paste form. Thus resulting paste was packed in a laminated pouch such that 500 g is filled in one pack. After incubating this pouch at 30°C for 7 days, it was heated at 80°C for 40 minutes.

For the novel fermented soybean paste-like foodstuff obtained according to the above operation a sensory evaluation by the sensory evaluation panel consisting of 3 experts was carried out. Upon the sensory evaluation, the sample was eaten as it was and scored by one to five points, with three points or more being evaluated as acceptable. The results are shown in Table 3.

Consequently, all samples with any amount of addition were acceptable as the novel fermented soybean paste-like foodstuff in the sensory test. When the amount of addition of the steam-cooked soybean is small, strong sweetness was exhibited while showing lighter color. To the contrary, when the amount of addition of the steam-cooked soybean is great, thickness, strong umami taste and richness were exhibited while showing darker red brown color.

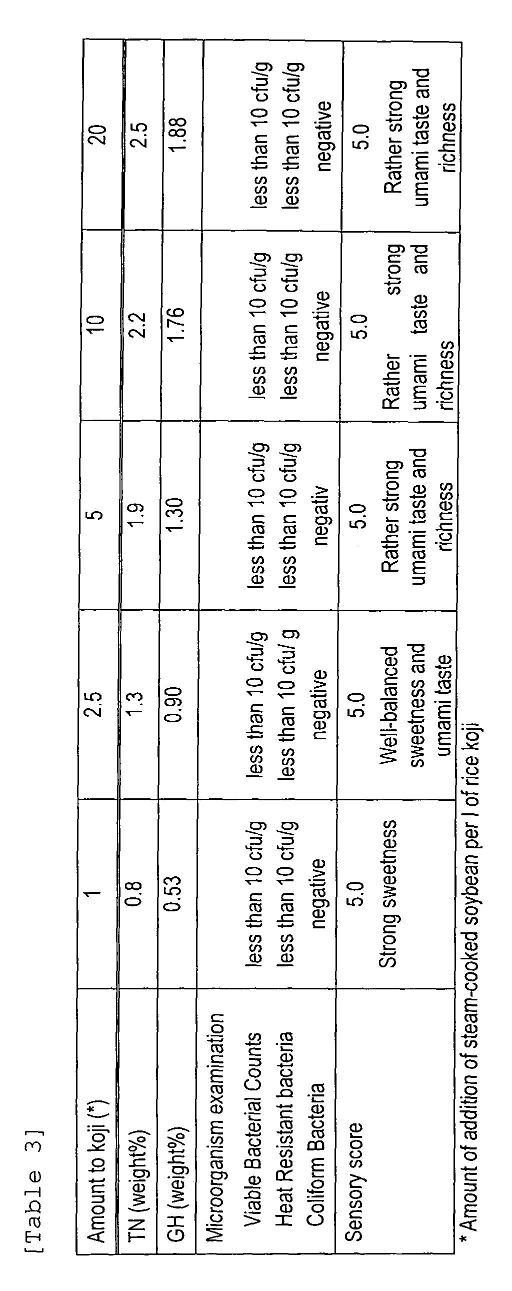

### [Example 4]

### (Study on the amount of charging nisin lactic acid bacterium)

Soybean in an amount of 300 g was soaked in water to allow water absorption, and steam-cooked in a steam cooker at 114°C for 40 minutes. In the steam-cooked soybean were mixed 0.3 to 30 g of a culture broth of L. lactis AJ110212 (FERM BP-8552) (nisin activity: 4500 IU/ml) and 1 g of a koji mold starter ("Koji mold starter for fermented soybean paste" manufactured by Bioc). The mixture was put in an airtight type laboratory koji making machine, which was subjected to koji making at 30°C for 43 hours. For removal of the heat generated upon fermentation during the koji making, the air sterilized by passing through a filter was used. During the koji making, koji was made in the koji making machine in the state of keeping the inner part out of the outside air except for the time period of "TEIRE"-treatment. The "TEIRE"-treatment was carried out for 2 minutes every 10 hours after the initiation of the koji making in the state of the inner part of the koji making machine being exposed to the outside air. In thus resulting koji was mixed 92.5 g a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 300 g is filled in one pack. After incubating this pouch at 30°C for 7 days, it was heated at 80°C for 40 minutes.

For the novel fermented soybean paste-like foodstuff obtained according to the above operation a sensory evaluation by the sensory evaluation panel consisting of 3 experts was carried out. Upon the sensory evaluation, the sample was eaten as it was and scored by one to five points, with three points or more being evaluated as acceptable. The results are shown in Table 4.

When the amount of addition of the nisin lactic acid bacterium falls within the range of 0.001 to 0.1 time of koji, contamination with undesired microorganisms was not observed. Accordingly, a novel fermented soybean paste-like foodstuff which is microbiologically clean was obtained.

**[Table 4]**

| Amount of addition of nisin lactic acid bacterium (*) | 0.001 times | 0.01 times | 0.1 times |
|---|---|---|---|
| TN (weight%) | 2.8 | 2.8 | 2.9 |
| GH (weight%) | 2.05 | 2.09 | 2.19 |

| Microorganism examination | | | |
|---|---|---|---|
| Viable Bacterial Counts | less than 10 cfu/g | less than 10 cfu/g | less than 10 cfu/g |
| Heat Resistant bacteria | less than 10 cfu/g | less than 10 cfu/g | less than 10 cfu/g |
| Coliform Bacteria | negative | negative | negativ |
| Sensory score | 5.0 Strong umami taste and richness | 5.0 Strong umami taste and richness | 5.0 Strong umami taste and richness |

| | | | |
|---|---|---|---|
| * Amount of addition to raw material | | | |

### [Example 5]

### (Study on the nisin activity in the culture broth of lactic acid bacterium)

Soybean in an amount of 350 g was soaked in water to allow water absorption, and steam-cooked in a steam cooker at 114°C for 40 minutes. In the steam-cooked soybean were mixed 70 g of a culture broth of L. lactis AJ110212 (FERM BP-8552) (nisin activity: 26 to 2600 IU/ml) and 3.5 g of a koji mold starter ("Koji mold starter for fermented soybean paste" manufactured by Bioc). The mixture was put in an airtight type laboratory koji making machine, which was subjected to koji making at 30°C for 43 hours. For removal of the heat generated upon fermentation during the koji making, the air sterilized by passing through a filter was used. During the koji making, koji was made in the koji making machine in the state of keeping the inner part out of the outside air except for the time period of "TEIRE"-treatment. The "TEIRE"-treatment was carried out for 2 minutes every 10 hours after the initiation of the koji making in the state of the inner part of the koji making machine being exposed to the outside air. In 275 g of thus resulting koji were mixed 50 g a culture broth of L. lactis AJ110212 (FERM BP-8552) (nisin activity: 26 to 2600 IU/ml) and 175 g of steam-cooked rice. After mixing, the mixture was subjected to grinding with a chopper to give a paste form. This paste was packed in a laminated pouch such that 500 g is filled in one pack. After incubating this pouch at 30°C for 7 days, it was heated at 80°C for 40 minutes.

For the novel fermented soybean paste-like foodstuff obtained according to the above operation, a sensory evaluation by the sensory evaluation panel consisting of 3 experts was carried out as well as microbial analyses. Upon the sensory evaluation, the sample was eaten as it was and scored by one to five points, with three points or more being evaluated as acceptable. The results are shown in Table 5.

When the nisin activity of the culture broth of lactic acid bacterium falls within the range of 26 to 2600 IU/ml, contamination with undesired microorganisms was not observed. Accordingly, a novel fermented soybean paste-like foodstuff being of good organoleptic quality and microbiologically clean was obtained.

**[Table 5]**

| Nisin Activity (*) | 26 IU/ml | 260 IU/ml | 2600 IU/ml |
|---|---|---|---|
| TN (weight%) | 1.8 | 1.8 | 1.9 |
| GH (weight%) | 1.28 | 1.39 | 1.46 |

| Microorganism examination | | | |
|---|---|---|---|
| Viable Bacterial Counts | less than 20 cfu/g | less than 20 cfu/g | less than 20 cfu/g |
| Heat Resistant bacteria | less than 20 cfu/g | less than 20 cfu/g | less than 20 cfu/g |
| Coliform Bacteria | negative | negative | negativ |
| Sensory score | 5.0 Strong umami taste and richness, well-balanced sweetness | 5.0 Strong umami taste and richness, well-balanced sweetness | 5.0 Strong umami taste and richness, well-balanced sweetness |

| | | | |
|---|---|---|---|
| * Nisin activity in the culture broth of the lactic acid bacteria | | | |

### [Example 6]

### (Study on the condition of koji-making)

Soybean in an amount of 300 g was soaked in water to allow water absorption, and steam-cooked in a steam cooker at 114°C for 40 minutes. In the steam-cooked soybean were mixed 6 g of a culture broth of L. lactis AJ110212 (FERM BP-8552) (nisin activity: 3000 IU/ml) and 1 to 3 g of a koji mold starter ("Koji mold starter for fermented soybean paste" manufactured by Bioc). The mixture was put in an airtight type laboratory koji making machine, which was subjected to koji making at 30°C to 35°C for 16 to 62 hours. For removal of the heat generated upon fermentation during the koji making, the air sterilized by passing through a filter was used. During the koji making, koji was made in the koji making machine in the state of keeping the inner part out of the outside air except for the time period of "TEIRE"-treatment. The "TEIRE"-treatment was carried out for 2 minutes every 10 hours after the initiation of the koji making in the state of the inner part of the koji making machine being exposed to the outside air. In thus resulting koji was mixed 92.5 g a culture broth of L. lactis AJ110212 (FERM BP-8552) (nisin activity: 2500 IU/ml). After mixing, the mixture was subjected to grinding with a chopper to give a paste form. This paste was packed in a laminated pouch such that 300 g is filled in one pack. After incubating this pouch at 30°C for 7 to 14 days, it was heated at 80°C for 40 minutes.

For the novel fermented soybean paste-like foodstuff obtained according to the above operation, a sensory evaluation by the sensory evaluation panel consisting of 3 experts was carried out as well as microbial analyses. Upon the sensory evaluation, the sample was eaten as it was and scored by one to five points, with three points or more being evaluated as acceptable. The results are shown in Table 6.

**[Table 6]**

| | | | | | |
|---|---|---|---|---|---|
| Koji making period (hr) | 16 | 19 | 22 | 43 | 62 |
| Koji making temp. (°C) | 35 | 35 | 35 | 30 | 20 |
| mount of koji mold starter (g) | 3 | 3 | 3 | 1 | 1 |
| Hydrolyzation period (days) | 14 | 14 | 14 | 7 | 7 |
| TN (weight%) | 1.08 | 1.83 | 2.17 | 2.7 | 2.54 |
| GH (weight%) | 0.32 | 0.58 | 1.03 | 2.07 | 1.97 |

| Microorganism examination | | | | | |
|---|---|---|---|---|---|
| Viable Bacterial Counts | less than 10 cfu/g | less than 10 cfu/g | less than 10 cfu/g | less than 10 cfu/g | less than 10 cfu/g |
| Heat Resistant bacteria | less than 10 cfu/g | less than 10 cfu/g | less than 10 cfu/g | less than 10 cfu/g | less than 10 cfu/g |
| Coliform Bacteria | negative | negative | negativ | negative | negative |
| Sensory score | 2.5 | 4.0 | 4.0 | 5.0 | 4.0 |

### [Example 7]

### (Effect of adding rice to the resulting koji)

Soybean in an amount of 7000 g was soaked in water to allow water absorption, and steam-cooked in a steam cooker at 114°C for 40 minutes. In the steam-cooked soybean were mixed 140 g of a culture broth of L. lactis AJ110212 (FERM BP-8552) (nisin activity: 2900 IU/ml) and 7 g of a koji mold starter ("Koji mold starter for fermented soybean paste" manufactured by Bioc). The mixture was put in an airtight type laboratory koji making machine, which was subjected to koji making at 30°C for 43 hours. For removal of the heat generated upon fermentation during the koji making, the air sterilized by passing through a filter was used. During the koji making, koji was made in the koji making machine in the state of keeping the inner part out of the outside air except for the time period of "TEIRE"-treatment. The "TEIRE"-treatment was carried out for 2 minutes every 10 hours after the initiation of the koji making in the state of the inner part of the koji making machine being exposed to the outside air. Steam-cooked rice was prepared in a steam cooker at 114°C for 40 minutes and cooled down to 30°C. In thus resulting koji were mixed the steam-cooked rice in the amount adjusting the weight ratio of the resulting koji and the steam cooked rice to 9:1 to 5: 5 (10: 0 as the control) and the culture broth of L. lactis AJ110212 (FERM BP-8552) (nisin activity: 2200 IU/ml) in the amount adjusting the water content of the mixture to 43%. After mixing, the mixture was subjected to grinding with a chopper to give a paste form. This paste was packed in a laminated pouch such that 300 g is filled in one pack. After incubating this pouch at 30°C for 7 days, it was heated at 80°C for 40 minutes.

For the fermented soybean paste-like foodstuff obtained according to the above operation, a sensory evaluation by the sensory evaluation panel consisting of 3 experts was carried out as well as microbial analyses. Upon the sensory evaluation, the sample was eaten as it was and each sample was compared in bitterness, umami taste and sweetness with the control (no rice was mixed, Each sensory score was 5). The results are shown in Table 7.

The bitterness was reduced and the sweetness was increased by adding rice to the resulting koji. The fermented soybean paste like foodstuff obtained by the addition of steam-cooked rice in the amount adjusting the weight ratio of the resulting koji and the steam cooked rice to 9:1 to 5: 5 had preferable umami taste, richness and sweetness. Accordingly, the fermented soybean-like foodstuff containing rice is suitable to a food to which sweetness need to be imparted but bitterness not.

**[Table 7]**

| Ratio of koji and rice | 10:0 (control) | 9:1 | 8:2 | 7:3 | 6:4 | 5:5 |
|---|---|---|---|---|---|---|
| TN (weight%) | 2.6 | 2.3 | 2.1 | 1.7 | 1.1 | 1.1 |
| GH (weight%) | 2.0 | 1.7 | 1.5 | 1.3 | 0.7 | 0.6 |
| Direct sugars (weight%) | 3.2 | 9.2 | 13.6 | 17.9 | 22.9 | 26.7 |

| Microorganism examination | | | | | | |
|---|---|---|---|---|---|---|
| Viable Bacterial Counts | less than 10 cfu/g | less than 10 cfu/g | less than 10 cfu/g | less than 10 cfu/g | less than 10 cfu/g | less than 10 cfu/g |
| Heat Resistant bacteria | less than 10 cfu/g | less than 10 cfu/g | less than 10 cfu/g | less than 10 cfu/g | less than 10 cfu/g | less than 10 cfu/g |
| Coliform Bacteria | Negative | negative | negative | negativ | negative | negative |

| Sensory evaluation | | | | | | |
|---|---|---|---|---|---|---|
| Bitterness | 5.0 | 4.3 | 3.7 | 3.0 | 2.5 | 2.0 |
| Umami taste | 5.0 | 4.6 | 4.3 | 3.5 | 3.2 | 3.2 |
| Sweetness | 5.0 strong umami taste,richness slight bitterness | 5.3 | 6.0 | 7.0 | 7.5 | 7.7 strong sweetness |

### [example 8]

Soybean in an amount of 50 kg was soaked in water to allow water absorption, and steam-cooked in a steam cooker at 114°C for 40 minutes. The steam-cooked soybean was put into an airtight type koji making machine, and therein were mixed 1 kg of a culture broth of L. lactis AJ110212 (FERM BP-8552) (nisin activity: 4500 IU/ml) and 0.05 kg of a koji mold starter ("Koj i mold starter for fermented soybean paste" manufactured by Bioc), followed by subjecting to koji making at 30°C for 43 hours. For removal of the heat generated upon fermentation during the koji making, the air sterilized by passing through a HEPA filter was used. During the koji making, koji was made in the koji making machine in the state of keeping the inner part out of the outside air except for the time period of "TEIRE" -treatment. The "TEIRE" -treatment was carried out for 15 minutes every 10 hours after the initiation of the koji making in the state of the inner part of the koji making machine being exposed to the outside air. To thus resulting koji was added 15.4 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g is filled in one pack. After incubating this pouch at 30°C for 7 days, it was heated at 80°C for 40 minutes.

Using the fermented soybean paste-like foodstuff obtained according to the above operation, stir-fried vegetables were prepared. The stir-fried vegetables were prepared by adding 3.5 g of the novel fermented soybean paste-like foodstuff and 2.4 g of sodium chloride to 400 g of cabbage, 50 g of bean sprout and 150 g of pork followed by stirring-and frying. As a control, a similar dish prepared by adding 20 g of commercially available fermented soybean paste (salt content: 11%) (amount of sodium chloride: 2.2 g) in place of the novel fermented soybean paste-like foodstuff followed by stirring-and frying was used. For the stir-fried vegetables, sensory evaluations by the sensory evaluation panel consisting of 3 experts were carried out. The results are shown in Table 8.
When commercially available fermented soybean paste was used, the sharpness of the taste was absent, and richness was insufficient. To the contrary, when the novel fermented soybean paste-like foodstuff was used, richness was imparted to the stir-fried vegetables, which resulted in excellent sensory qualities.

**[Table 8]**

| | Novel fermented soybean paste-like foodstuff used | Commercially available fermented soybean paste used (Control) |
|---|---|---|
| Umami taste | ++ | + |
| Saltiness | - | + |
| Sourness | - | - |
| Sweetness | - | - |
| Bitterness | ± | - |
| Richness, Thickness | +++ | + |
| Other | Richness, Excellent | Unclear taste |

### [Example 9]

Soybean in an amount of 50 kg was soaked in water to allow water absorption, and steam-cooked in a steam cooker at 114°C for 40 minutes. The steam-cooked soybean was put into an airtight type koji making machine, and therein were mixed 1 kg of a culture broth of L. lactis AJ110212 (FERM BP-8552) (nisin activity: 4500 IU/ml) and 0.05 kg of a koji mold starter ("Koji mold starter for fermented soybean paste" manufactured by Bioc), followed by subjecting to koji making at 30°C for 43 hours. For removal of the heat generated upon fermentation during the koji making, the air sterilized by passing through a HEPA filter was used. During the koji making, koji was made in the koji making machine in the state of keeping the inner part out of the outside air except for the time period of "TEIRE"-treatment. The "TEIRE"-treatment was carried out for 15 minutes every 10 hours after the initiation of the koji making in the state of the inner part of the koji making machine being exposed to the outside air. To thus resulting koji was added 15.4 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g is filled in one pack. After incubating this pouch at 30°C for 7 days, it was heated at 80°C for 40 minutes.

To 100 g of the fermented soybean paste-like foodstuff obtained according to the above operation were added 2 g of sodium chloride, 1 g of vinegar and 5 ml of soy sauce, which were mixed well to make a paste product. As a control, to a commercially available fermented soybean paste in place of the novel fermented soybean paste-like foodstuff were added 2 g of sodium chloride, 1 g of vinegar and 5 ml of soy sauce, which were mixed well to make a paste product. For the paste product, sensory evaluations by the sensory evaluation panel consisting of 3 experts were carried out. The results are shown in Table 9.

The Paste product with the commercially available fermented soybean paste resulted in strong saltiness, and also weak thickness, umami taste and richness. To the contrary, the product with the novel fermented soybean paste-like foodstuff exhibited richness and thickness. The novel fermented soybean paste-like foodstuff could be eaten as it is, and in addition, it could be also used as a dipping sauce.

**[Table 9]**

| | Novel fermented soybean paste-like foodstuff used | Commercially available fermented soybean paste used(Control) |
|---|---|---|
| Umami taste | ++ | + |
| Saltiness | - | +++ |
| Sourness | - | - |
| Sweetness | + | - |
| Bitterness | ± | - |
| Richness, thickness | +++ | + |
| Other | Rich, Excellent | Strong saltiness, Not acceptable |

### [Example 10]

Soybean in an amount of 50 kg was soaked in water to allow water absorption, and steam-cooked in a steam cooker at 114°C for 40 minutes. The steam-cooked soybean was put into an airtight type koji making machine, and therein were mixed 1 kg of a culture broth of L. lactis AJ110212 (FERM BP-8552) (nisin activity: 4500 IU/ml) and 0.05 kg of a koji mold starter ("Koji mold starter for fermented soybean paste" manufactured by Bioc), followed by subjecting to koji making at 30°C for 43 hours. For removal of the heat generated upon fermentation during the koji making, the air sterilized by passing through a HEPA filter was used. During the koji making, koji was made in the koji making machine in the state of keeping the inner part out of the outside air except for the time period of "TEIRE"-treatment. The "TEIRE"-treatment was carried out for 15 minutes every 10 hours after the initiation of the koji making in the state of the inner part of the koji making machine being exposed to the outside air. To thus resulting koji was added 15.4 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g is filled in one pack. After incubating this pouch at 30°C for 7 days, it was heated at 80°C for 40 minutes.

Using the fermented soybean paste-like foodstuff obtained according to the above operation, custard cream was prepared. Six egg yolks, 150 g of sugar and 100 g of the novel fermented soybean paste-like foodstuff were thoroughly mixed, then thereto was added 50 g of wheat flour. After milk was heated to almost boiling, a 500 ml portion was added to the mixture. After mixing, thereto was added 500 g of melted butter to prepare a custard cream. As a control, a custard cream was prepared by adding 600 g of melted butter without adding the novel fermented soybean paste-like foodstuff. For this custard cream, sensory evaluations by the sensory evaluation panel consisting of 3 experts were carried out. The results are shown in Table 10.

The custard cream to which the novel fermented soybean paste-like foodstuff was added exhibited richness and strong sweetness, which achieved excellent sensory results.

**[Table 10]**

| | Novel fermented soybean paste-like foodstuff used | Not used |
|---|---|---|
| Umami taste | + | + |
| Saltiness | - | - |
| Sourness | - | - |
| Sweetness | +++ | - |
| Bitterness | ± | - |
| Richness, thick texture | +++ | + |
| Other | Richness, Excellent | |

### <Comparative Example 1>

### (Comparison between an open type and an airtight type koji making machine)

Soybean in an amount of 500 kg was soaked in water to allow water absorption, and steam-cooked in a steam cooker at 114°C for 40 minutes. In the steam-cooked soybean were mixed 10 kg of a culture broth of L. lactis AJ110212 (FERM BP-8552) (nisin activity: 4500 IU/ml) and 0.5 kg of a koji mold starter ("Koji mold starter for fermented soybean paste" manufactured by Bioc). The mixture was put into a box type (open type; open to the outside air) koji making machine, and subjected to koji making at 30°C for 43 hours. For removal of the heat generated upon fermentation during the koji making, unsterilized air was used. To thus resulting koji was added 154 kg of a culture broth of L. lactis AJ110212 (FERM BP-8552) (nisin activity: 4500 IU/ml). After mixing, the mixture was subjected to grinding with a chopper to give a paste form. This paste was packed in a laminated pouch such that 500 g is filled in one pack. After incubating this pouch at 30°C for 7 days, it was heated at 80°C for 40 minutes.

For the novel fermented soybean paste-like foodstuff obtained according to the above operation, analyses of microorganisms, and analyses of solubilized TN, glutamic acid concentration, lactic acid concentration and pH, as well as a sensory evaluation by the sensory evaluation panel consisting of 3 experts were conducted. Upon the sensory evaluation, the sample was eaten as it was and scored by one to five points, with three points or more being evaluated as acceptable. The results are shown in Table 11 together with the analyses results and evaluation results of the novel fermented soybean paste-like foodstuff obtained by the operation with completely identical conditions except that the airtight type koji making machine of the invention was used in place of the box type (open to the outside air) koji making machine.

As a result, the novel fermented soybean paste-like foodstuff prepared using the box type koji making machine was contaminated with undesired microorganisms such as genera *Bacillus, Pediococcus* and *Staphyrococcus* prior to pasteurization. Bacteria belonging to genera *Bacillus* remained also after the pasteurization. In addition, as a result of sensory evaluation, sourness was so strong that it was not acceptable. When the lactic acid value was measured, extremely high value was observed in comparison with the foodstuff prepared through koji making using the airtight type koji making machine. Accordingly, it was believed that rancidity was caused due to the contamination with genera *Pediococcus.*

**[Table 11]**

| | Open to the outside air type koji making machine (static ventilation type) | airtight type koji making machine |
|---|---|---|
| TN (weight%) | 2.1 | 2.4 |
| GH (weight%) | 1.78 | 1.90 |
| Lactic acid (weight%) | 2.7 | 1.23 |
| PH | 4.71 | 5.4 |

| Microorganism examination (before pasteurization) | | |
|---|---|---|
| Viable bacterial counts | 6.9 x 10⁸ cfu/g (*1) | 2.2 x 10² cfu/g |
| Heat resistant bacteria | 1.2 x 10⁶ cfu/g | less than 10 cfu/g |
| Coliform bacteria | negative | Negative |

| microorganism examination (after pasteurization) | | |
|---|---|---|
| Viable bacterial counts | 3.7 x 10³ cfu/g (*2) | less than 10 cfu/g |
| Heat resistant bacteria | 1.2 x 10³ cfu/g | less than 10 cfu/g |
| Coliform bacteria | negative | Negative |
| Sensory score | 2.5 Strong sourness, Not acceptable | 5.0 Strong deliciousness and thick texture |

| | | |
|---|---|---|
| *1) Almost all colonies were genera *Pediococcus.* | | |
| *2) Almost all colonies were genera *Bacillus.* | | |

### [Industrial Applicability]

The novel fermented soybean paste-like foodstuff of the present invention can be used in seasoning applications or used as a foodstuff due to its thickness, strong umami taste and richness, and can be extensively used in wide variety of seasonings such as dipping sauces, and in processed foods including confectionaries. Accordingly, the invention is extremely advantageous in industry, particularly in a food industry.

## Claims

1. A method of producing a fermented foodstuff comprising the steps of adding a koji mold and a bacteriocin producing lactic acid bacterium, a cell fraction or disrupted cells thereof or a supernatant thereof to a food material, making koji in an apparatus in which the outside air is shut out except for the time period of "TEIRE"-treatment, while supplying sterilized air continuously or intermittently.

2. The process of claim 1, wherein the resulting koji is mixed with a bacteriocin producing lactic acid bacterium, a cell fraction or disrupted cells thereof or a supernatant thereof.

3. The process of claim 1 or 2, wherein food material containing soybean is added to the resulting koji in an amount of 0.01 to 50 times by weight of the resulting koji.

4. The method according to claim 1, wherein said food material is soybean, rice or wheat.

5. The process according to claim 4, wherein said food material is soybean.

6. The method according to claim 2 or 4, wherein an unrefined soy is formed by making a paste form of the resulting mixture, and then the unrefined soy is hydrolyzed.

7. The method according to any one of the preceding claims, wherein the said koji mold is A. *sojae* and/or A. *oryzae.*

8. The method according to any one of the preceding claims, wherein the said bacteriocin producing lactic acid bacterium is a nisin producing lactic acid bacterium.

9. The method according to any one of the preceding claims, wherein the nisin activity of a culture broth of the nisin producing lactic acid bacterium or a cell fraction, disrupted cells or a supernatant thereof is 20 IU/ml or higher.

10. The method according to any one of the preceding claims, wherein the nisin activity of a culture broth of the nisin producing lactic acid bacterium or a cell fraction, disrupted cells or a supernatant thereof is 200 IU/ml or higher.

11. The method according to any one of the preceding claims, wherein the said lactic acid bacterium is Lactococcus lactis AJ110212 (FERM BP-8552).

12. The method according to any one of the preceding claims, wherein the said sterilized air is sterilized with a filter which can collect 99.97% or more of dust of 0.3 µm or larger.

13. The method according to any one of the preceding claims, wherein the total time period in which the outside air is shut out is 85 to 97,5 % of the total time period of koji making.

14. The method according to claim 13, wherein the total time period in which the outside air is shut out is 95 to 97, 5 % of the total time period of koji making.

15. The method according to any one of the preceding claims wherein the time period of koji making is 17 to 62 hours, and the time period of koji making in which the outside air is shut out is 15.5 to 61.5 hours.

16. The method according to any one of the preceding claims, wherein the amount of the said culture broth of a bacteriocin producing lactic acid bacterium or a supernatant thereof added to the food material is 0.0001 to 0.2 time in weight of the food material.

17. The method according to any one of the preceding claims, wherein the amount of the said culture broth of a bacteriocin producing lactic acid bacterium or a supernatant thereof added to the food material is 0.001 to 0.1 time in weight of the food material.

18. The method according to any one of the preceding claims, wherein the amount of the said culture broth of a bacteriocin producing lactic acid bacterium or a supernatant thereof mixed with the resulting koji is 0.01 to 5 times in weight of the resulting koji.

19. The method according to any one of the preceding claims, wherein the hydrolyzing condition of the unrefined soy is at 20 to 50°C for 1 to 50 days.

20. The method according to any one of the preceding claims, wherein the hydrolyzing condition of the unrefined soy is at 20 to 45°C for 3 to 30 days.

21. The method according to any one of claims 6 to 20, wherein the unrefined soy is hydrolysed in the presence of sodium chloride in an amount of less than 5 % by weight of the unrefined soy.

22. A fermented foodstuff obtainable by a process according to any one of claims 1 to 21.

23. The use of a foodstuff of claim 22 as a food material or as a seasoning.
